# EUROPÄISCHE PATENTSCHRIFT

(11) **EP 1 284 216 B1**
(45) Veröffentlichungstag und Bekanntmachung des Hinweises auf die Patenterteilung: **04.05.2005**
(21) Anmeldenummer: 02015406.8
(22) Anmeldetag: 11.07.2002
(51) Int. Cl.: B60R 7/04, B60R 11/02, E05C 1/14

(54) **Mittelkonsole**
Central console
Console centrale

(30) Priorität: 14.08.2001 DE 10139867
(43) Veröffentlichungstag der Anmeldung: 19.02.2003
(73) Patentinhaber: Dr.Ing. h.c.F. Porsche Aktiengesellschaft, 70435 Stuttgart (DE)
(72) Erfinder: Hupfer, Christian, 76287 Rheinstetten (DE)

(56) Entgegenhaltungen:
- DE-A- 4 309 620
- DE-A- 10 000 284

## Beschreibung

Die Erfindung betrifft ein Ablagefach in einem Fahrzeug mit einem eine Ablageöffnung überdeckenden, schwenkbar angelenkten Deckel und einer im Ablagefach angeordneten Ablageschale, welche durch Aufschwenken des Deckels zugänglich wird, wobei zumindest zwischen Ablageschale und Deckel sowie zwischen Ablagefach und Ablageschale jeweils ein lösbarer Verschluss angeordnet ist und die Verschlüsse wahlweise über eine gemeinsame Entriegelungseinrichtung entriegelbar sind.

Aus DE 10000284 A1 ist eine Ablagefach in einem Kraftfahrzeug mit einer verschlussvorrichtung nach dem Oberbegriff der Anspruchs 1 bekannt.

Bei einer bekannten Anordnung der eingangs genannten Gattung (DE 43 09 620 A1) umfasst die Verschlussanordnung für das zweiteilige Ablagefach einen Verschluss zwischen Ablageschale und Deckel, einen weiteren Verschluss zwischen Ablageschale und Ablagefach sowie einen zusätzlichen Verschluss zwischen Deckel und Ablagefach. Alle Verschlüsse sind mittels einer gemeinsamen Entriegelungseinrichtung entriegelbar, wobei die Entriegelungseinrichtung eine einzige oder zwei nebeneinander liegende Handhaben aufweist. Dieser Anordnung haftet der Nachteil an, dass die drei zusammen wirkenden Verschlüsse und die Entriegelungseinrichtung einen aufwendigen, kostenintensiven Aufbau aufweisen und dass Fehlbedingungen auftreten können.

Aufgabe der Erfindung ist es, eine Verschlussanordnung für ein zweiteiliges Ablagefach in einem Fahrzeug mit einer Entriegelungseinrichtung so weiterzubilden, dass einerseits der konstruktive Aufbau wesentlich vereinfacht und zudem die Bedienfreundlichkeit erhöht wird.

Erfindungsgemäß wird diese Aufgabe durch die Merkmale des Anspruchs 1 gelöst. Weitere, die Erfindung in vorteilhafter Weise ausgestaltende Merkmale enthalten die Unteransprüche. Die mit der Erfindung hauptsächlich erzielten Vorteile sind darin zu sehen, dass durch die erfindungsgemäße Ausbildung der beiden Verschlüsse und der Entriegelungseinrichtung ein einfacher, kostengünstiger Aufbau geschaffen wird, der zu dem sehr bedienungsfreundlich ist. Es werden lediglich Verschlüsse benötigt, die jeweils wenige Bauteile umfassen, wobei die Verschlüsse in einfacher Weise mit der Entriegelungseinrichtung gekoppelt sind. Die erfindungsgemäße Anordnung benötigt sehr wenig Bauraum und ermöglicht eine komplett geschlossene und bündige Designfläche im Bereich des zweiteiligen Ablagefachs.

Ein Ausführungsbeispiel der Erfindung wird im folgenden anhand der Zeichnung näher erläutert.

Es zeigen
- Fig. 1: einen vertikalen Längsschnitt durch ein zweiteiliges Ablagefach in einem Fahrzeug bei geschlossenem Deckel mit einem zweifachen Verschluss und einer Entriegelungseinrichtung,
- Fig. 2: einen Längsschnitt gemäß Fig. 1, wobei der Deckel eine hochgeschwenkte Stellung einnimmt und
- Fig. 3: einen Längsschnitt gemäß Fig. 1, wobei der Deckel und die Ablageschale eine hochgeschwenkte Stellung einnehmen.

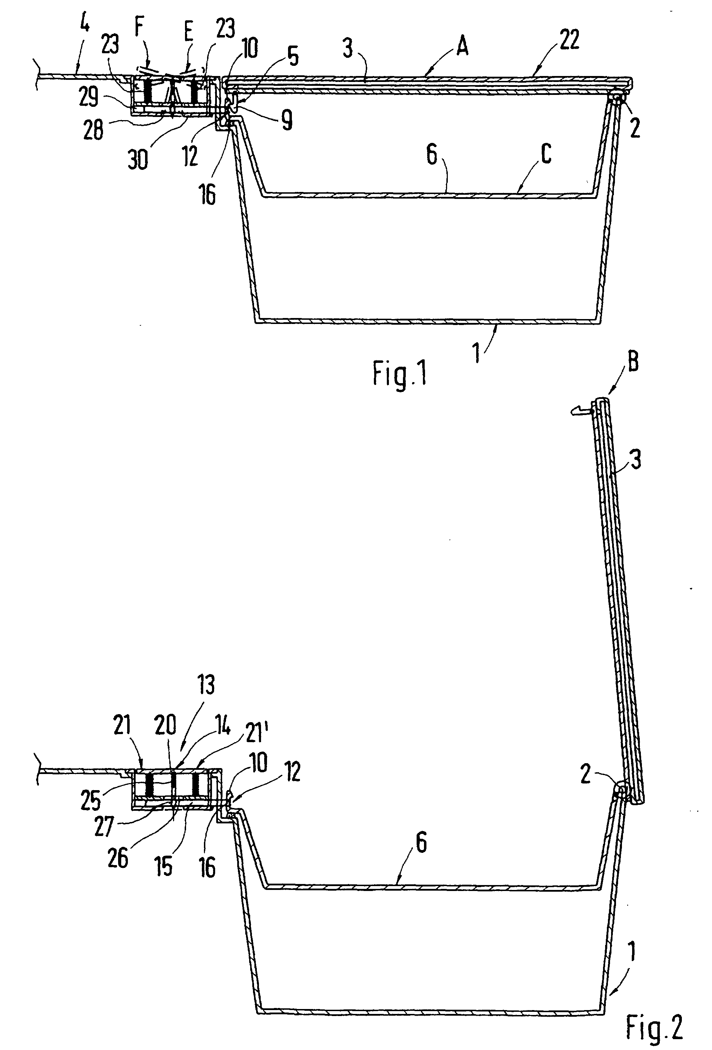

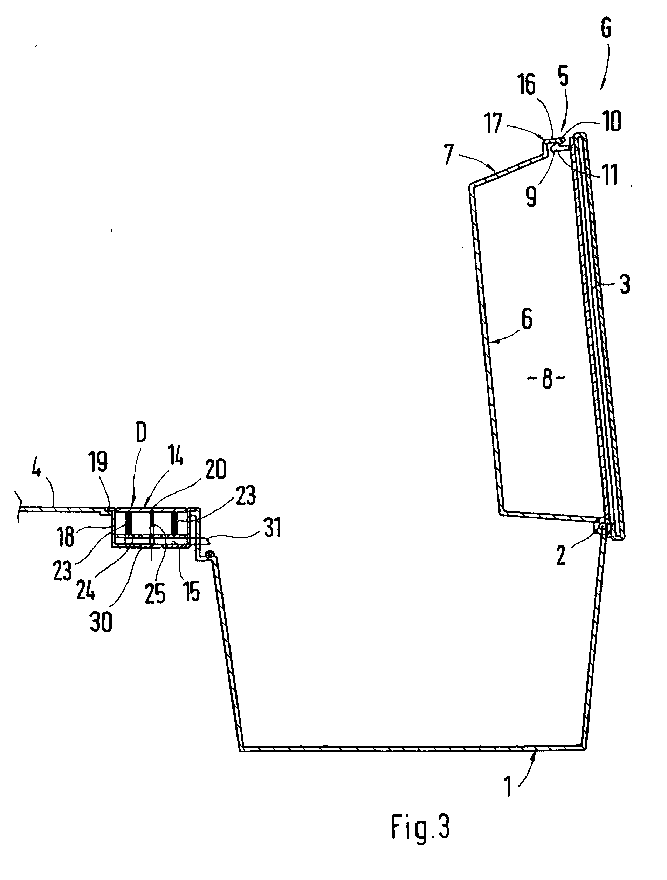

Fig. 1 zeigt ein in einem nicht dargestellten Fahrzeug zwischen zwei Fahrzeugsitzen angeordnetes Ablagefach 1, welches durch einen die Ablagefachöffnung überdeckenden, schwenkbar in einer Scharnierachse 2 am Ablagefach 1 angelenkten Deckel 3 nach oben geschlossen wird. Das Ablagefach 1 ist an einer feststehenden Mittelkonsole, einer schwenkbaren Mittelarmlehne, einem Handschuhkasten oder dgl. angeordnet. Im Ausführungsbeispiel ist das Ablagefach 1 einstückig mit einer feststehenden Mittelkonsole 4 ausgebildet. Die etwa horizontal ausgerichtete, querverlaufende Scharnierachse 2 befindet sich am hinteren oberen Rand der Mittelkonsole 4. Der in Schließstellung A etwa horizontal ausgerichtete Deckel 3 ist nach Lösen eines ersten Verschlusses 5 nach oben hinten in eine hochgeschwenkte Stellung B verschwenkbar (Fig. 2). Weiterhin ist im oberen Bereich des Ablagefaches 1 eine Ablageschale 6 angeordnet, die ebenfalls durch Aufschwenken des Deckels 3 zugänglich wird, die aber auch mit dem Deckel 3 eine Einheit 7 bildend, hochschwenkbar ist (Fig. 3). Hierzu ist die Ablageschale 6 ebenfalls in der Scharnierachse 2 am Ablagefach 1 angelenkt und wird durch den Deckel 3 auf eine Art und Weise überdeckt, dass dieser mit dem Hohlraum 8 der trogförmigen Ablageschale 6 einen geschlossenen Aufnahmeraum z. B. für einen Telefonhörer, für ein Handy oder dgl. bildet.

Der erste Verschluss 5 ist zwischen dem Deckel 3 und der Ablageschale 6 vorgesehen und umfasst eine am Deckel 3 angeordnete federbelastete schwenkbare Sperrklinke 9, die in Schließstellung A des Deckels 3 eine feststehende Rastnase 10 der Ablageschale 6 hintergreift. Die nach unten ragende Sperrklinke 9 ist auf der der Scharnierachse 2 gegenüberliegenden Seite des Deckels 3 angeordnet, wobei das obere Ende der Sperrklinke 9 drehbar am Deckel 3 angelenkt ist. Am unteren Ende weist die Sperrklinke 9 eine nasenförmige Anformung 11 auf, die die Rastnase 10 der Ablageschale 6 untergreift. Ferner ist ein zweiter Verschluss 12 angeordnet, der zwischen Ablagefach 1 und Ablageschale 6 wirksam ist (Fig. 2).

Für beide Verschlüsse 5, 12 ist eine gemeinsame vorgelagerte Entriegelungseinrichtung 13 vorgesehen, die sich aus einem federbelasteten, doppelseitigen Drucktaster 14 und einem längsverschieblichen Sperrriegel 15 zusammensetzt, wobei je nach Druckbeaufschlagung des Drucktasters 14 der erste Verschluss 5 oder der zweite Verschluss 12 entriegelt wird. Der zweite Verschluss 12 wird durch den Sperrriegel 15 gebildet, der in Schließstellung C der Ablageschale 6 in eine Aussparung 16 der Ablageschale 6 zumindest bereichsweise hineinragt oder durch diese Aussparung 16 hindurchragt. Die Aussparung 16 ist an einem endseitigen aufrechten Wandabschnitt 17 der Ablageschale 6 vorgesehen und zwar unmittelbar unterhalb der nach hinten gerichteten Rastnase 10. Die Aussparung 16 ist im Querschnitt gesehen geringfügig größer ausgebildet als der Querschnitt des Sperrriegels 15, wobei die Querschnittsformen von Sperriegel 15 und Aussparung 16 aufeinander abgestimmt sind.

Der Sperrriegel 15 hat vorzugsweise eine rechteckförmige oder quadratische Querschnittsform. Der doppelseitige Drucktaster 14 und der längliche Sperrriegel 15 sind einem Gehäuse 18 zugeordnet, das im Ausführungsbeispiel von oben her in eine Aufnahmeöffnung 19 der Mittelkonsole 4 eingesetzt ist. Die Aufnahmeöffnung 19 erstreckt sich benachbart dem Ablagefach 1. Der doppelseitige Drucktaster 14 ist etwa mittig am oberen Rand des Gehäuses 18 um die Drehachse 20 schwenkbar gelagert, wobei in Ruhestellung D des Drucktasters 14 beide Schaltflächen 21, 21' des Drucktasters 14 etwa oberflächenbündig mit der benachbarten äußeren Deckelkontur 22 verlaufen. Beiden Schaltflächen 21, 21' des Drucktasters 14 ist jeweils ein aufrecht angeordnetes Federelement 23 zugeordnet. Jedes Federelement 23 wird durch eine Druckfeder gebildet, die sich zwischen der Innenseite der Schaltfläche 21, 21' und der darunter liegenden Wand 24 des Gehäuses 18 erstreckt.

Ferner weist der Drucktaster 14 im Bereich seiner mittigen Drehhachse 20 einen nach unten gerichteten Stellarm 25 auf, der durch eine Öffnung 26 der Wand 24 hindurchragt und mit seinem freien Ende 27 in eine zumindest nach oben hin offene Ausnehmung 28 des Sperrriegels 15 hineinragt. Die Ausnehmung 28 am Sperrriegel 15 erweitert sich vorne und hinten jeweils nach unten außen. Der längliche Sperrriegel 15 erstreckt sich in einer gehäuseseitigen Aufnahme 29, die in Höhenrichtung durch die Wand 24 und die untere Begrenzungswand 30 begrenzt wird. Seitliche Führungen am Gehäuse 18 für den Sperrriegel 15 sind in den Figuren nicht näher dargestellt. In der Ruhestellung D des Drucktasters 14 verläuft der aufrechte Stellarm 25 etwa vertikal, die Schaltflächen 21, 21' sind oberflächenbündig mit der Deckelaußenkontur 22 ausgerichtet und der Sperrriegel 15 ragt durch die Aussparung 16 der Ablageschale 6 hindurch. An seinem freien Ende weist der Sperrriegel 15 eine Abschrägung 31 auf, die parallel und mit geringem Abstand zur Schräge der nasenförmigen Anformung 11 verläuft.

Bei Betätigung des vorderen Drucktasters 14, d. h. der vorderen Schaltfläche 21 nach unten (Stellung E) wird der Stellarm 25 des Drucktasters 14 um einen geringen Winkel entgegen dem Uhrzeigersinn verschwenkt, wodurch gleichzeitig der Sperrriegel 15 nach hinten verlagert wird. Dadurch gelangt die endseitige Abschrägung 31 des Sperrriegels 15 in Kontakt mit der federbelasteten Sperrklinke 9 und verschwenkt diese nach hinten (entgegen dem Uhrzeigersinn), so dass die Sperrklinke 9 außer Eingriff mit der feststehenden Rastnase 10 der Ablageschale 6 gelangt. Der erste Verschluss 5 zwischen Ablageschale 6 und Deckel 3 ist nunmehr gelöst und der federbelastete Deckel 3 schwenkt nach oben hin in seine Stellung B. Der Aufnahmeraum für den Telefonhörer bzw. dem Handy ist nunmehr frei zugänglich (Fig. 2).

Nach Loslassen des Drucktasters 14 kehren der Drucktaster 14 und der Sperrriegel 15 in ihre Ausgangsstellung zurück.

Bei Betätigung des hinteren Drucktasters 14 nach unten, d. h. der hinteren Schaltfläche 21' wird der Stellarm 25 des Drucktasters 14 im Uhrzeigersinn um einen geringen Winkel verschwenkt, wodurch der Sperrriegel 15 in der Aufnahme 29 nach vorne bewegt wird und das freie Ende des Sperrriegels 15 aus der Aussparung 16 der Ablageschale 6 heraustritt, so dass der zweite Verschluss 12 entriegelt ist (Stellung F des Drucktasters 14).

Bei entriegeltem zweiten Verschluss 12 wird die Ablageschale 6 gemeinsam mit dem Deckel 3 durch den federbeaufschlagten Deckel 3 nach oben in die Stellung G hochgeschwenkt, in der das Ablagefach 1 frei zugänglich ist. Nach dem Loslassen des Drucktasters 14 kehrt dieser wieder in seine horizontale Ursprungslage zurück.

## Patentansprüche

1. Ablagefach in einem Fahrzeug, mit einem eine Ablageöffnung überdeckenden, schwenkbar angelenkten Deckel und einer im Ablagefach angeordneten Ablageschale, welche durch Aufschwenken des Deckels zugänglich wird, wobei zumindest zwischen Ablageschale und Deckel sowie zwischen Ablagefach und Ablageschale jeweils ein lösbarer Verschluss angeordnet ist und die Verschlüsse wahlweise über eine gemeinsame Entriegelungseinrichtung entriegelbar sind, **dadurch gekennzeichnet, dass** die Entriegelungseinrichtung (13) für beide Verschlüsse (5, 12) einen federbeaufschlagten doppelseitigen Drucktaster (14) umfasst, der über einen aufrechten Stellarm (25) mit einem axial verschiebbaren Sperriegel (15) zusammenwirkt, wobei je nach Druckbeaufschlagung des Drucktasters (14) der eine Verschluss (5) oder der andere Verschluss (12) entriegelt wird.

2. Ablagefach nach Anspruch 1, **dadurch gekennzeichnet, dass** der erste Verschluss (5) zwischen Ablageschale (6) und Deckel (3) eine am Deckel (3) angeordnete, federbelastete Sperrklinke (9) umfasst, die in Schließstellung (A) des Deckels (3) eine feststehende Rastnase (10) der Ablageschale (6) hintergreift, wobei die schwenkbare Sperrklinke (9) durch den Drucktaster (14) bzw. den axial verschiebbaren Sperrriegel (15) in eine Freigabestellung verlagerbar ist.

3. Ablagefach nach Anspruch 1, **dadurch gekennzeichnet, dass** der zweite Verschluss (12) zwischen Ablagefach (1) und Ablageschale (6) durch den Sperrriegel (15) gebildet wird, der in Schließstellung der Einheit Ablageschale / Deckel mit einer Aussparung (16) der Ablageschale (6) zusammenwirkt.

4. Ablagefach nach Anspruchl, **dadurch gekennzeichnet, dass** der doppelseitige Drucktaster (14) und der Sperrriegel (15) einem Gehäuse (18) zugeordnet sind, das in eine Aufnahmeöffnung (19) eingesetzt ist.

5. Ablagefach nach einem der vorhergehenden Ansprüche, **dadurch gekennzeichnet, dass** ein nach unten ragender Stellarm (25) des doppelseitigen Drucktasters (14) mit seinem freien Ende (27) in eine nach oben hin offene Ausnehmung (28) des Sperrriegels (16) hineinragt, wobei je nach Druckbeaufschlagung des Drucktasters (14) der Sperrriegel (15) in die eine oder andere Richtung bewegt wird.

6. Ablagefach nach Anspruch 5, **dadurch gekennzeichnet, dass** bei Betätigung der vorderen Schaltfläche (21) des Drucktasters (14) der Sperrriegel (15) nach hinten verschoben wird, wobei eine endseitige Abschrägung (31) des Sperrriegels (15) die federbelastete Sperrklinke (19) des Deckels (3) entgegen dem Uhrzeigersinn verschwenkt und somit den ersten Verschluss (5) zwischen Deckel (3) und Ablageschale (6) entriegelt.

7. Ablagefach nach Anspruch 6, **dadurch gekennzeichnet, dass** bei Betätigung der hinteren Schaltfläche (21') des Drucktasters (14) der Sperrriegel (15) nach vorne verschoben wird, wobei das freie Ende (17) des Sperrriegels (16) aus der Aussparung (16) der Ablageschale (6) heraustritt, so dass der zweite Verschluss (12) entriegelt ist und die Ablageschale (6) gemeinsam mit dem Deckel (3) nach oben in eine Freigabestellung (G) schwenkbar sind.

8. Ablagefach nach einem der vorhergehenden Ansprüche, **dadurch gekennzeichnet, dass** die äußere Deckelkontur (22) etwa oberflächenbündig mit der Außenkontur des vorgelagerten unbetätigten Drucktasters (14) verläuft.

## Claims

1. A parcel compartment in a vehicle, with a lid covering a parcel-compartment opening and articulated in a pivotable manner, and a parcel shelf which is arranged in the parcel compartment and which is accessible by pivoting the lid, wherein one releasable closure is arranged in each case at least between the parcel shelf and the lid as well as between the parcel compartment and the parcel shelf, and the closures can optionally be unlocked by way of a common unlocking device, **characterized in that** the unlocking device (13) for the two closures (5, 12) comprises a spring-loaded, double-sided push switch (14) which co-operates with an axially displaceable locking bolt (15) by way of an upright control arm (25), wherein one closure (5) or the other closure (12) is unlocked depending on the pressure stressing of the push switch (14).

2. A parcel compartment according to Claim 1, **characterized in that** the first closure (5) comprises a spring-loaded catch (9) between the parcel shelf (6) and the lid (3), the spring-loaded catch (9) being arranged on the lid (3) and engaging behind a stationary catch projection (10) on the parcel shelf (6) in the closed position (A) of the lid (3), wherein the pivotable catch (9) can be moved into a release position by the push switch (14) or the axially displaceable locking bolt (15).

3. A parcel compartment according to Claim 1, **characterized in that** the second closure (12) is formed between the parcel compartment (1) and the parcel shelf (6) by the locking bolt (15) which co-operates with a recess (16) in the parcel shelf (6) in the closed position of the unit comprising the parcel shelf and the lid.

4. A parcel compartment according to Claim 1, **characterized in that** the double-sided push switch (14) and the locking bolt (15) are associated with a casing (18) which is inserted into a receiving opening (19).

5. A parcel compartment according to one of the preceding Claims, **characterized in that** a downwardly projecting control arm (25) of the double-sided push switch (14) projects with its free end (27) into a recess (28), open at the top, in the locking bolt (15), wherein the locking bolt (15) is moved in one or other direction depending upon the pressure stressing of the push switch (14).

6. A parcel compartment according to Claim 5, **characterized in that**, when the front switching face (21) of the push switch (14) is actuated, the locking bolt (15) is displaced to the rear, wherein a slope (31) at the end of the locking bolt (15) pivots the spring-loaded catch (9) of the lid (3) in the anticlockwise direction and thus unlocks the first closure (5) between the lid (3) and the parcel shelf (6).

7. A parcel compartment according to Claim 6, **characterized in that**, when the rear switching face (21') of the push switch (14) is actuated, the locking bolt (15) is displaced to the front, wherein the free end (17) of the locking bolt (15) moves out of the recess (16) of the parcel shelf (6), so that the second closure (12) is unlocked and the parcel shelf (6) is jointly pivotable with the lid (3) upwards into a release position (G).

8. A parcel compartment according to one of the preceding Claims, **characterized in that** the external lid profile (22) extends substantially flush with the external profile of the non-actuated push switch (14) situated in front of it.

## Revendications

1. Boîte de rangement dans un véhicule, comportant un couvercle articulé pivotant, recouvrant une ouverture de rangement, ainsi qu'un bac de rangement disposé dans la boîte de rangement, lequel est accessible par ouverture par pivotement du couvercle, une fermeture déverrouillable étant disposée au moins entre le bac de rangement et le couvercle, ainsi qu'entre la boîte de rangement et le bac de rangement, et les fermetures pouvant être déverrouillées en option par un dispositif de déverrouillage commun, **caractérisée en ce que** le dispositif de déverrouillage (13) pour les deux fermetures (5, 12) comprend un bouton-poussoir (14) double soumis à l'action d'un ressort et qui coopère, par un bras de réglage (25) vertical, avec un verrou (15) pouvant coulisser axialement, une fermeture (5) ou l'autre fermeture (12) étant déverrouillée suivant la pression exercée sur le bouton-poussoir (14).

2. Boîte de rangement selon la revendication 1, **caractérisée en ce que** la première fermeture (5) entre le bac de rangement (6) et le couvercle (3) comprend un cliquet de blocage (9) soumis à l'action d'un ressort, disposé sur le couvercle (3), qui en position de fermeture (A) du couvercle (3) passe derrière un ergot d'encliquetage (10) fixe du bac de rangement (6), le cliquet de blocage (9) pivotant étant déplaçable dans une position de déverrouillage, par le bouton-poussoir (14) ou le verrou ( 15) pouvant coulisser axialement.

3. Boîte de rangement selon la revendication 1, **caractérisée en ce que** la deuxième fermeture (12) entre la boîte de rangement (1) et le bac de rangement (6) est formée par le verrou (15) qui, en position de fermeture de l'unité bac de rangement/couvercle, coopère avec une découpe (16) du bac de rangement (6).

4. Boîte de rangement selon la revendication 1, **caractérisée en ce que** le bouton-poussoir (14) double et le verrou (15) sont associés à un boîtier (18) qui est inséré dans une ouverture de réception (19).

5. Boîte de rangement selon l'une des revendications précédentes, **caractérisée en ce qu'**un bras de réglage (25) dépassant vers le bas du bouton-poussoir (14) double s'engage, par son extrémité libre (27), à l'intérieur d'un évidement (28) ouvert vers le haut du verrou (15), le verrou (15) étant déplacé dans un sens ou dans l'autre suivant la pression exercée sur le bouton-poussoir (14).

6. Boîte de rangement selon la revendication 5, **caractérisée en ce qu'**en cas d'actionnement de la surface de commande avant (21) du bouton-poussoir (14), le verrou (15) est déplacé vers l'arrière, un chanfrein (31) côté extrémité du verrou (15) faisant pivoter le cliquet de blocage (19) soumis à l'action d'un ressort du couvercle (3), dans le sens anti-horaire, et déverrouille ainsi la première fermeture (5) entre le couvercle (3) et le bac de rangement (6).

7. Boîte de rangement selon la revendication 6, **caractérisée en ce qu'**en cas d'actionnement de la surface de commande arrière (21') du bouton-poussoir (14), le verrou (15) est déplacé vers l'avant, l'extrémité libre (17) du verrou (15) ressortant de la découpe (16) du bac de rangement (6), ce qui fait que la deuxième fermeture (12) est déverrouillée et le bac de rangement (6) peut pivoter avec le couvercle (3) vers le haut, dans une position de déverrouillage (G).

8. Boîte de rangement selon l'une des revendications précédentes, **caractérisée en ce que** le contour extérieur (22) du couvercle s'étend approximativement à fleur du contour extérieur du bouton-poussoir (14) non actionné placé devant.
